# EUROPÄISCHE PATENTANMELDUNG

(11) **EP 3 435 265 A1**
(43) Veröffentlichungstag der Anmeldung: **30.01.2019**
(21) Anmeldenummer: 17182938.5
(22) Anmeldetag: 25.07.2017
(51) Int. Cl.: G06F 21/31, H04L 9/32

(54) **VERFAHREN ZUR SICHEREN AUTHENTIFIZIERUNG BEI MIT EINEM SERVER VERBINDBAREN GERÄTEN, INSBESONDERE BEI ZUGANGSKONTROLLVORRICHTUNGEN ODER BEZAHL- BZW. VERKAUFSAUTOMATEN EINES ZUGANGSKONTROLLSYSTEMS**

(71) Anmelder: SKIDATA AG, 5083 Grödig/Salzburg (AT)
(72) Erfinder: Ries, Thomas, 9020 Klagenfurt am Wörthersee (AT); Grafl, Michael, 9020 Klagenfurt am Wörthersee (AT); Kerschbaumer, Andreas, 9020 Klagenfurt am Wörthersee (AT)
(74) Vertreter: Karakatsanis, Georgios

(57) **Zusammenfassung**

Es wird ein Verfahren zur sicheren Authentifizierung bei mit einem Server (S) verbindbaren Geräten (d1), insbesondere bei Zugangskontrollvorrichtungen oder Bezahl- bzw. Verkaufsautomaten eines Zugangskontrollsystems vorgeschlagen, im Rahmen dessen der Server (S) für jedes Gerät (d1) ein separates Schlüsselpaar für asymmetrische Kryptografie bestehend aus einem öffentlichen und einem privaten Schlüssel bei der Registrierung des Gerätes auf dem Server (S) generiert und nur diesem Gerät (d1) zuordnet, wobei der einem Gerät (d1) zugeordnete öffentliche Schlüssel während der Registrierung des Gerätes (d1) auf dem Server (S) auf das Gerät (d1) übertragen wird und wobei die Authentifizierung beim Zugriff auf ein Gerät (d1) mittels eines Zugriffs-Tokens erfolgt, welches vom Server (S) mit dem privaten Schlüssel des Schlüsselpaares signiert ist, das dem Gerät (1) zugeordnet ist.

## Beschreibung

Die vorliegende Erfindung bezieht sich auf ein Verfahren zur sicheren Authentifizierung bei mit einem Server verbindbaren Geräten, insbesondere bei Zugangskontrollvorrichtungen oder Bezahl- bzw. Verkaufsautomaten eines Zugangskontrollsystems gemäß dem Oberbegriff des Patentanspruchs 1.

Bei einem Gerätemanagementsystem, welches mehrere mit einem Server zum Zweck der Datenkommunikation verbindbare Geräte umfasst, müssen sich Techniker oft auf den Geräten einloggen, um beispielsweise Wartungsarbeiten durchzuführen. Insbesondere bei Systemen umfassend viele Geräte resultiert dies in nachteiliger Weise in der Notwendigkeit des Verwaltens einer großen Menge an Zugangsdaten.

Aus dem Stand ist bekannt, die erforderliche Authentifizierung für den Zugriff auf ein Gerät mittels eines für jedes Gerät gewählten Passworts durchzuführen. In nachteiliger Weise muss hierbei eine große Anzahl von Passwörtern gewählt und sicher aufbewahrt werden, was in der Praxis oft dazu führt, dass schwache Passwörter gewählt werden und auch, dass Passwörter zwischen Technikern ausgetauscht werden, was die Sicherheit negativ beeinflusst. Zudem kann dies insbesondere bei Geräten, bei denen selten die Notwendigkeit einer Authentifizierung entsteht, etwa weil Wartungsarbeiten sehr selten erforderlich sind, dazu führen, dass eine Wiederherstellung vergessener Passwörter durchgeführt werden muss. Um die Sicherheit zu erhöhen, kann die aus dem Stand der Technik bekannte Zweifaktor-Authentifizierung verwendet werden, wobei auch in diesem Fall in nachteiliger Weise eine große Anzahl von Passwörtern verwaltet werden muss.

Ferner kann die Authentifizierung mittels einer sogenannten Full Scale Public Key Infrastructure (PKI) basierend auf Zertifikaten durchgeführt werden. Hierbei hat jeder Techniker ein digitales Zertifikat, welches beispielsweise auf einer Smartcard abgelegt sein kann, mittels dessen der Zugang zu den Geräten gewährleistet wird. Das Zertifikat muss hierbei von einer Zertifizierungsstelle (Certification Authority) herausgegeben und mit ihrer digitalen Unterschrift versehen werden. Um diese Verfahren einsetzen zu können, muss auf jedem Gerät das Wurzelzertifikat der Zertifizierungsstelle installiert sein. Derartige Verfahren sind dem Fachmann wohl bekannt.

Wenn Zertifikate vor Ablauf der Gültigkeit zurückgezogen werden, was beispielsweise bei Beendigung eines Arbeitsverhältnisses oder aus Sicherheitsgründen der Fall sein kann, müssen von der Zertifizierungsstelle entsprechend aktualisierte Zertifikatssperrlisten an sämtliche Geräte übermittelt werden. Dies wiederum bedeutet, dass ein Gerät mit einem Server der Zertifizierungsstelle verbunden werden muss, nachdem ein Zertifikat zurückgenommen worden ist, um unautorisierten Zugang zum Gerät zu vermeiden. In nachteiliger Weise resultieren die Übertragung und die Handhabung der Zertifikatssperrlisten in zusätzlicher Komplexität der auf den Geräten installierten Software und erfordern eine höhere Speicherkapazität.

Kommt es dazu, dass ein Wurzelzertifikat zurückgenommen werden muss, wenn etwa das Wurzelzertifikat kompromittiert wurde, dann muss dieses in nachteiliger Weise auf allen Geräten zurückgenommen werden, was wiederum dazu führt, dass alle bisher ausgestellten Zertifikate auf allen Geräten ungültig werden.

Der vorliegenden Erfindung liegt die Aufgabe zugrunde, ein Verfahren zur sicheren Authentifizierung bei mit einem Server verbindbaren Geräten, insbesondere bei Zugangskontrollvorrichtungen oder Bezahl- bzw. Verkaufsautomaten eines Zugangskontrollsystems anzugeben, durch dessen Durchführung die Komplexität der PKI-Verfahren vermieden wird. Zudem soll die Notwendigkeit des Verwaltens einer großen Menge von Passwörtern entfallen.

Diese Aufgabe wird durch die Merkmale des Patentanspruchs 1 gelöst. Weitere vorteilhafte Ausgestaltungen gehen aus den Unteransprüchen hervor.

Demnach wird ein Verfahren zur sicheren Authentifizierung bei mit einem Server verbindbaren Geräten, insbesondere bei Zugangskontrollvorrichtungen oder Bezahl- bzw. Verkaufsautomaten eines Zugangskontrollsystems vorgeschlagen, im Rahmen dessen der Server für jedes Gerät ein separates Schlüsselpaar für asymmetrische Kryptografie bestehend aus einem öffentlichen und einem privaten Schlüssel bei der Registrierung des Gerätes auf dem Server generiert und nur diesem Gerät zuordnet, wobei der einem Gerät zugeordnete öffentliche Schlüssel während der Registrierung des Gerätes auf dem Server auf das Gerät übertragen wird und wobei die Authentifizierung beim Zugriff auf ein Gerät mittels eines Zugriffs-Tokens erfolgt, welches vom Server mit dem privaten Schlüssel des Schlüsselpaares signiert ist, das dem Gerät zugeordnet ist.

Im Gegensatz zur Full Scale Public Key Infrastructure (PKI) ist der öffentliche Schlüssel eines Gerätes weder vom Server noch von einer Zertifizierungsstelle signiert.

Durch die erfindungsgemäße Konzeption entfällt die Notwendigkeit der Verwaltung von Zertifikatssperrlisten. Dadurch, dass jedem Gerät ein Schlüsselpaar bestehend aus einem öffentlichen und einem privaten Schlüssel zugeordnet wird, wird, wenn ein privater Schlüssel eines Gerätes bekannt wird, die Sicherheit der weiteren Geräte nicht beeinflusst. Die Notwendigkeit einer Zurücknahme eines Zertifikats durch eine Zertifizierungsstelle entsteht somit in vorteilhafter Weise nicht.

Im Einzelnen umfasst das Verfahren folgende Schritte: Bei der Registrierung eines Gerätes auf dem Server, der beispielsweise ein Gerätemanagement-Server sein kann, werden vom Server ein privater und ein öffentlicher Schlüssel für asymmetrische Kryptografie generiert, die nur diesem Gerät zugeordnet werden, wobei der öffentliche Schlüssel auf dem Gerät und der private Schlüssel auf dem Server gespeichert wird.

Will eine Person, z.B. ein Techniker, auf ein Gerät zugreifen, muss sie einen Zugriffs-Token für ein bestimmtes Gerät vom Server beantragen. In diesem Fall generiert der Server einen Zugriffs-Token, wobei der Zugriffs-Token vom Server mit dem diesem Gerät zugeordneten privaten Schlüssel signiert und an den Techniker übermittelt wird. Der Zugriffs-Token kann im Rahmen weiterer Ausgestaltungen auch auf einem USB-Stick, auf einer Chipkarte oder auf einem anderen Speichermedium gespeichert werden. Um einen Zugriffs-Token zu beantragen, muss die jeweilige Person auf den Server zugreifen können.

Im Rahmen einer Weiterbildung der Erfindung kann der Zugriffs-Token weitere Informationen oder Parameter bezüglich des gewährten Zugriffs auf das Gerät enthalten, beispielsweise eine zeitliche Gültigkeitsspanne und/oder eine Gültigkeit für eine vorgegebene Anzahl von Logins und/oder eine Gültigkeit für definierte Aktionen.

Der Techniker übermittelt den Zugriffs-Token an das Gerät, welches die mittels des privaten Schlüssels des Geräts erstellte Signatur des Zugriffs-Tokens anhand des auf dem Gerät gespeicherten öffentlichen Schlüssels des diesem Gerät zugeordneten Schlüsselpaares verifiziert, wobei nach erfolgter Verifizierung der Signatur die Gültigkeit des Zugriffs-Tokens überprüft wird und bei Gültigkeit ein Zugriff auf das Gerät gegebenenfalls gemäß den Zusatzinformationen oder Parametern hinsichtlich der Gültigkeit, die im Zugangs-Token enthalten sein können, ermöglicht wird.

Wenn die Signatur nicht verifiziert werden kann oder wenn bei verifizierter Signatur eine Ungültigkeit des Zugriffs-Tokens festgestellt wird, wird der Zugriff auf das Gerät verweigert. Ein Zugriffs-Token kann beispielsweise ungültig sein, wenn er abgelaufen oder zurückgenommen ist. Auf diese Weise kann der Zugriff auf die Geräte in Abhängigkeit der Personen, denen Zugriff gewährt wird, und/oder der Sicherheitsrichtlinien für jedes Gerät flexibel gestaltet werden. Die Geräte weisen Speichermittel, die entsprechende Software und die erforderliche Rechenkapazität auf.

Die erfindungsgemäße Authentifizierung zum Zugriff auf ein Gerät, um z.B. einem Techniker Zugriff auf ein Gerät für lokale Wartungsarbeiten zu ermöglichen, hat den Vorteil, dass das Gerät beim Zugriff nicht mit dem Server verbunden sein muss, da für die Verifizierung eines Zugriffs-Tokens lediglich der öffentliche Schlüssel, der erfindungsgemäß auf dem Gerät gespeichert ist, benötigt wird.

Gemäß einer Weiterbildung der Erfindung kann der Server dem Gerät einen Zeitstempel übermitteln, wobei das Gerät diesen Zeitstempel speichert und bei der Prüfung der Gültigkeit der Zugriffs-Tokens zusätzlich zur Systemzeit des Geräts verwendet. Durch diese Maßnahme wird die Sicherheit erhöht, da anhand des Zeitstempels erkannt wird, dass ein Token ungültig ist, auch wenn die Systemzeit des Geräts dem Gültigkeitsdatum eines abgelaufenen Zugriffs-Tokens entsprechend manipuliert wurde. Die Übermittlung des Zeitstempels kann bei Verbindung eines Gerätes mit dem Server oder in regelmäßigen oder unregelmäßigen Abständen erfolgen.

Gemäß einer Weiterbildung der Erfindung kann ein Server eine Liste enthaltend die abgelaufenen oder zurückgenommenen Zugriffs-Tokens für ein Gerät an dieses eine Gerät übermitteln. Durch diese Maßnahme wird die Sicherheit erhöht, da anhand der Liste erkannt wird, dass ein Zugriffs-Token ungültig ist, auch wenn die Systemzeit des Geräts dem Gültigkeitsdatum eines abgelaufenen Zugriffs-Tokens entsprechend manipuliert wurde. Ein weiterer Vorteil besteht darin, dass aufgrund des Vorsehens eines separaten Schlüsselpaars für jedes Gerät die Liste von abgelaufenen oder zurückgenommenen Zugriffs-Tokens nur an ein Gerät übermittelt werden muss, wodurch die Netzwerklast und Speicherbedarf für die anderen Geräte signifikant reduziert werden.

Zur Erneuerung des einem Gerät zugeordneten Schlüsselpaares wird vom Server ein neues Schlüsselpaar generiert, wobei der neue öffentliche Schlüssel an das Gerät übermittelt wird, wenn dieses Gerät mit dem Server verbunden ist. Das neue Schlüsselpaar ersetzt hierbei das alte Schlüsselpaar. Die Generierung eines neuen Schlüsselpaares kann die Zurücknahme eines oder mehrerer Zugriffs-Tokens in vorteilhafter Weise ersetzen, da aufgrund der Signierung der vorhandenen Zugriffs-Tokens mit dem nicht mehr gültigen privaten Schlüssel die vorhandenen Zugriffs-Tokens ungültig werden. Die Erneuerung des einem Gerät zugeordneten Schlüsselpaares beeinflusst die weiteren Geräten zugeordneten Schlüsselpaare nicht.

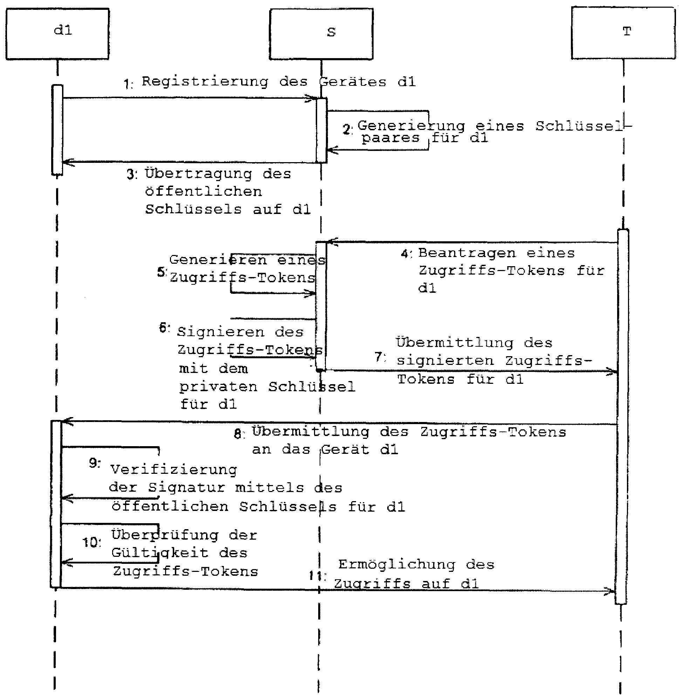

Die Erfindung wird im Folgenden anhand der Figur, in der ein Sequenzdiagramm zur Veranschaulichung der Registrierung eines Gerätes und der Generierung und Verwendung eines Zugriffs-Tokens dargestellt ist, beispielhaft näher erläutert.

In der beigefügten Figur ist mit T ein Techniker bezeichnet, wobei ein mit einem Server verbindbares Gerät mit dl und der Server mit S bezeichnet sind. Das Gerät dl kann beispielsweise eine Zugangskontrollvorrichtung eines Zugangskontrollsystems, beispielsweise eines Zugangskontrollsystems in einem Skigebiet, oder ein Bezahl- bzw. Verkaufsautomat sein.

Zu Beginn des Verfahrens registriert sich das Gerät dl beim Server S (Schritt 1). Die Registrierung im Sinne der Erfindung ist eine Registrierung nach der Implementation des erfindungsgemäßen Verfahrens. Hierbei werden vom Server S ein privater und ein öffentlicher Schlüssel für asymmetrische Kryptografie generiert (Schritt 2), die nur diesem Gerät dl zugeordnet werden, wobei der öffentliche Schlüssel auf das Gerät dl übertragen und gespeichert wird (Schritt 3). Der private Schlüssel wird auf dem Server S gespeichert.

Im Schritt 4 beantragt ein Techniker T einen Zugriffs-Token für das Gerät dl vom Server S, wobei anschließend (Schritt 5) der Server S einen Zugriffs-Token generiert, der vom Server S mit dem privaten Schlüssel für dieses Gerät dl signiert wird (Schritt 6) und an den Techniker T übermittelt wird (Schritt 7).

Um sich auf das Gerät dl einzuloggen und eine Authentifizierung durchzuführen, wird der Zugriffs-Token an das Gerät dl übermittelt (Schritt 8), wobei das Gerät dl die mittels des privaten Schlüssels des Geräts dl erstellte Signatur des übermittelten Zugriffs-Tokens anhand des auf dem Gerät dl gespeicherten öffentlichen Schlüssels verifiziert (Schritt 9), wobei nach erfolgter Verifizierung der Signatur die Gültigkeit des Zugriffs-Tokens überprüft wird (Schritt 10) und bei Gültigkeit ein Zugriff auf das Gerät d1 ermöglicht wird (Schritt 11).

## Patentansprüche

1. Verfahren zur sicheren Authentifizierung bei mit einem Server (S) verbindbaren Geräten (d1), insbesondere bei Zugangskontrollvorrichtungen oder Bezahl- bzw. Verkaufsautomaten eines Zugangskontrollsystems, **dadurch gekennzeichnet, dass** der Server (S) für jedes Gerät (d1) ein separates Schlüsselpaar für asymmetrische Kryptografie bestehend aus einem öffentlichen und einem privaten Schlüssel bei der Registrierung des Gerätes auf dem Server (S) generiert und nur diesem Gerät (d1) zuordnet, wobei der einem Gerät (d1) zugeordnete öffentliche Schlüssel während der Registrierung des Gerätes (d1) auf dem Server (S) auf das Gerät (d1) übertragen wird und wobei die Authentifizierung beim Zugriff auf ein Gerät (d1) mittels eines Zugriffs-Tokens erfolgt, welches vom Server (S) mit dem privaten Schlüssel des Schlüsselpaares signiert ist, das dem Gerät (1) zugeordnet ist.

2. Verfahren zur sicheren Authentifizierung bei mit einem Server (S) verbindbaren Geräten (d1), nach Anspruch 1, **dadurch gekennzeichnet, dass** der Zugriffs-Token weitere Informationen oder Parameter bezüglich des gewährten Zugriffs auf das Gerät (d1) enthält.

3. Verfahren zur sicheren Authentifizierung bei mit einem Server (S) verbindbaren Geräten (d1), nach Anspruch 1 oder 2, **dadurch gekennzeichnet, dass**, um Zugriff zu erhalten, der Zugriffs-Token an das Gerät (d1) übermittelt wird, wobei das Gerät (d1) die mittels des privaten Schlüssels des Geräts (d1) erfolgte Signatur des übermittelten Zugriffs-Tokens anhand des auf dem Gerät (d1) gespeicherten öffentlichen Schlüssels verifiziert, wobei nach erfolgter Verifizierung der Signatur die Gültigkeit des Zugriffs-Tokens überprüft wird und bei Gültigkeit ein Zugriff auf das Gerät (d1) ermöglicht wird.

4. Verfahren zur sicheren Authentifizierung bei mit einem Server (S) verbindbaren Geräten (d1), nach Anspruch 1, 2 oder 3, **dadurch gekennzeichnet, dass** bei abgelaufenen oder zurückgenommenen Zugriffs-Tokens für ein Gerät (d1), vom Server (S) eine Liste enthaltend die abgelaufenen oder zurückgenommenen Zugriffs-Tokens für dieses Gerät (d1) an dieses Gerät (d1) übermittelt wird.

5. Verfahren zur sicheren Authentifizierung bei mit einem Server (S) verbindbaren Geräten (d1), nach Anspruch 1, 2, 3 oder 4, **dadurch gekennzeichnet, dass** zur Erneuerung des einem Gerät (d1) zugeordneten Schlüsselpaares vom Server (S) ein neues Schlüsselpaar generiert wird, welches das alte Schlüsselpaar ersetzt, wobei der neue öffentliche Schlüssel an das Gerät (d1) übermittelt wird.

6. Verfahren zur sicheren Authentifizierung bei mit einem Server (S) verbindbaren Geräten (d1), nach Anspruch 1, 2, 3, 4 oder 5, **dadurch gekennzeichnet, dass** zusätzlich zur lokalen Systemzeit des Geräts (d1) ein vom Server (S) übertragener und auf dem Gerät (d1) gespeicherter Zeitstempel zur Überprüfung der Gültigkeitsdauer der ausgestellten Zugriffs-Tokens verwendet wird.

## Geänderte Patentansprüche

### Geänderte Patentansprüche gemäss Regel 137(2) EPÜ.

1. Verfahren zur sicheren Authentifizierung bei mit einem Server (S) verbindbaren Geräten (d1), insbesondere bei Zugangskontrollvorrichtungen oder Bezahl- bzw. Verkaufsautomaten eines Zugangskontrollsystems, **dadurch gekennzeichnet, dass** der Server (S) für jedes Gerät (d1) ein separates Schlüsselpaar für asymmetrische Kryptografie bestehend aus einem öffentlichen und einem privaten Schlüssel bei der Registrierung des Gerätes auf dem Server (S) generiert und nur diesem Gerät (d1) zuordnet, wobei der einem Gerät (d1) zugeordnete öffentliche Schlüssel während der Registrierung des Gerätes (d1) auf dem Server (S) auf das Gerät (d1) übertragen wird und wobei die Authentifizierung beim Zugriff auf ein Gerät (d1) mittels eines Zugriffs-Tokens erfolgt, welches vom Server (S) generiert wird und vom Server (S) mit dem privaten Schlüssel des Schlüsselpaares signiert ist, das dem Gerät (1) zugeordnet ist.

2. Verfahren zur sicheren Authentifizierung bei mit einem Server (S) verbindbaren Geräten (d1), nach Anspruch 1, **dadurch gekennzeichnet, dass** der Zugriffs-Token weitere Informationen oder Parameter bezüglich des gewährten Zugriffs auf das Gerät (d1) enthält.

3. Verfahren zur sicheren Authentifizierung bei mit einem Server (S) verbindbaren Geräten (d1), nach Anspruch 1 oder 2, **dadurch gekennzeichnet, dass**, um Zugriff zu erhalten, der Zugriffs-Token an das Gerät (d1) übermittelt wird, wobei das Gerät (d1) die mittels des privaten Schlüssels des Geräts (d1) erfolgte Signatur des übermittelten Zugriffs-Tokens anhand des auf dem Gerät (d1) gespeicherten öffentlichen Schlüssels verifiziert, wobei nach erfolgter Verifizierung der Signatur die Gültigkeit des Zugriffs-Tokens überprüft wird und bei Gültigkeit ein Zugriff auf das Gerät (d1) ermöglicht wird.

4. Verfahren zur sicheren Authentifizierung bei mit einem Server (S) verbindbaren Geräten (d1), nach Anspruch 1, 2 oder 3, **dadurch gekennzeichnet, dass** bei abgelaufenen oder zurückgenommenen Zugriffs-Tokens für ein Gerät (d1), vom Server (S) eine Liste enthaltend die abgelaufenen oder zurückgenommenen Zugriffs-Tokens für dieses Gerät (d1) an dieses Gerät (d1) übermittelt wird.

5. Verfahren zur sicheren Authentifizierung bei mit einem Server (S) verbindbaren Geräten (d1), nach Anspruch 1, 2, 3 oder 4, **dadurch gekennzeichnet, dass** zur Erneuerung des einem Gerät (d1) zugeordneten Schlüsselpaares vom Server (S) ein neues Schlüsselpaar generiert wird, welches das alte Schlüsselpaar ersetzt, wobei der neue öffentliche Schlüssel an das Gerät (d1) übermittelt wird.

6. Verfahren zur sicheren Authentifizierung bei mit einem Server (S) verbindbaren Geräten (d1), nach Anspruch 1, 2, 3, 4 oder 5, **dadurch gekennzeichnet, dass** zusätzlich zur lokalen Systemzeit des Geräts (d1) ein vom Server (S) übertragener und auf dem Gerät (d1) gespeicherter Zeitstempel zur Überprüfung der Gültigkeitsdauer der ausgestellten Zugriffs-Tokens verwendet wird.
